# EUROPEAN PATENT APPLICATION

(11) **EP 1 548 613 A1**
(43) Date of publication of application: **29.06.2005**
(21) Application number: 03029699.0
(22) Date of filing: 23.12.2003
(51) Int. Cl.: G06F 17/30

(54) **Method and apparatus for performance improvement in a client/server system.**

(71) Applicant: SAP Aktiengesellschaft, 69190 Walldorf (DE)
(72) Inventor: Santoso, Budi, 69190 Walldorf (DE); Dittmar, Frank, 69190 Walldorf (DE)
(74) Representative: Schneider, Günther M., Dr.-Ing.

(57) **Abstract**

The invention provides methods and apparatus, including computer program products, for processing data in a cache computer system (10), the cache computer system (10) providing data base management capabilities to external computer systems (20, 30, 40), the cache computer system (10) providing main memory space to the external client computer systems (20, 30, 40), the data representing orders in a supply chain management application, the each order comprising parameters specifying the order, and an ID identifying the order, the cache computer system (10) further comprising capabilities for reading the order data in the main memory areas, and capabilities for transferring the order data from and into the main memory area to the external computer systems (20, 30, 40), the method comprising the following steps:
a) receiving, from an external client system (20, 30, 40), via an interface, a call for processing an order, the call specifying parameters of the order which is to be processed;
b) searching the specified order data in the main memory area according to the parameters specified in the call;
c) processing the specified order in the cache computer system (10);
d) returning an ID of the processed order data from the cache computer system (10) to the external client computer system (20, 30, 40).

## Description

### BACKGROUND OF THE INVENTION

This application relates to performance improvement for cache systems. Cache systems are computer systems which provide large memory space to other computer systems.

Specifically, in a cache-based database management system (DBMS), the data is held in main memory areas of the cache system. A typical cache system includes, for example, 60 Gigabyte of main memory space as well as certain processing capabilities.

### STATE OF THE ART

One field of use of cache systems is automatic planning and decision-making, like the Advanced Planning and Optimization (APO) applications for supply chain management (SCM) applications marketed by the company SAP Aktiengesellschaft, Walldorf, Germany. In such applications, high amounts of data are held in the cache. The data handled in SCM APO represents orders, such as transportation orders, production orders, stock transfer orders. The order data comprises one or more of source location, destination location, the operation to be done, and a date of action, as well as an ID for identifying the respective order. The operations to be performed on the order data comprise reading particular orders, deleting particular orders, extracting resource consumption.

Most operations on the data are performed in the APO application running on client systems external to the cache. The operations which are performed directly by the cache system are denoted operation management (OM) functions or COM routines. These operations include reading and writing data. For reading data, only a restricted number of parameters can be specified. When a client system which runs an APO application needs to perform complex operations such as selecting data relating to particular orders, too many orders must be read and transferred from the cache system into the client system, since the actual selecting operations must be performed on the client system levels, i.e. in the applications which use the data being kept in the cache architecture.

These data transfer steps reduce significantly the speed of the processing.

### SUMMARY OF THE INVENTION

It is an object of the present invention to provide a method and apparatus for accelerating operations on order data kept in a cache system which data is provided to external applications.

In general, in one aspect, this invention provides methods and apparatus, including computer program products, for processing data in a cache computer system, the cache computer system providing data base management capabilities to external computer systems, the cache computer system providing main memory space to the external client computer systems, the data representing orders in a supply chain management application, each order comprising parameters specifying the order, and an ID identifying the order, the cache computer system further comprising capabilities for reading the order data in the main memory areas, and capabilities for transferring the order data from and into the main memory area to the external computer systems, the method comprising the following steps:
a) receiving, from an external client system, via an interface, a call for processing an order, the call specifying parameters of the order which is to be processed;
b) searching the specified order data in the main memory area according to the parameters specified in the call;
c) processing the specified order in the cache computer system;
d) returning the ID of the processed order data from the cache computer system to the external client computer system.

Advantageous implementations can include one or more of the following features.

The order data may represent one of transportation order, stock transfer order, and production order.

The processing step c) may comprise a data filtering operation according to the specifying parameters.

The processing step c) may comprise a data deleting operation according to the specifying parameters.

The processing step c) may comprise an operation for extracting transportation orders from the main memory area according to the specifying parameters.

The processing step c) may comprise an operation for extracting production orders from the main memory area according to the specifying parameters.

The processing step c) may comprise an operation for extracting resource consumption with its aggregated orders from the main memory area according to the specifying parameters.

The invention further comprises a computer system for performing the inventive methods.This computer system may further comprise a database server system for backing up data kept in the cache computer system.

Yet further, the computer system according to the invention may further comprise an interface for communication with the external computer systems.

The invention comprises further a computer-readable storage medium comprising program code for performing the inventive methods, when loaded into a computer system.

### BRIEF DESCRIPTION OF DRAWINGS

- Fig. 1: illustrates a cache computer system together with other systems in which the present invention is preferably used;
- Figs. 2A, B: illustrate the sequence of operations for deleting planned orders in the art, and according to the invention, respectively;
- Figs. 3A, B: illustrate sequence of operations for reading stock transfer orders in the art, and according to the invention, respectively;
- Figs. 4A, B: illustrate sequence of operations for deleting stock transfer operations in the art, and according to the invention, respectively;
- Figs. 5A, B: illustrate sequence of operations for extracting resource consumption in the art, and according to the invention, respectively;
- Figs. 6A, B: illustrate sequence of operations for deleting transport orders in the art, and according to the invention, respectively;
- Figs. 7A, B: illustrate sequence of operations for deleting production orders in the art, and according to the invention, respectively;
- Figs. 8A, B: illustrate sequence of operations for selecting transport operations in another application in the art, and according to the invention, respectively; and
- Fig. 9: illustrates two of the inventive OM routines together with their calling routines.

### DETAILED DESCRIPTION

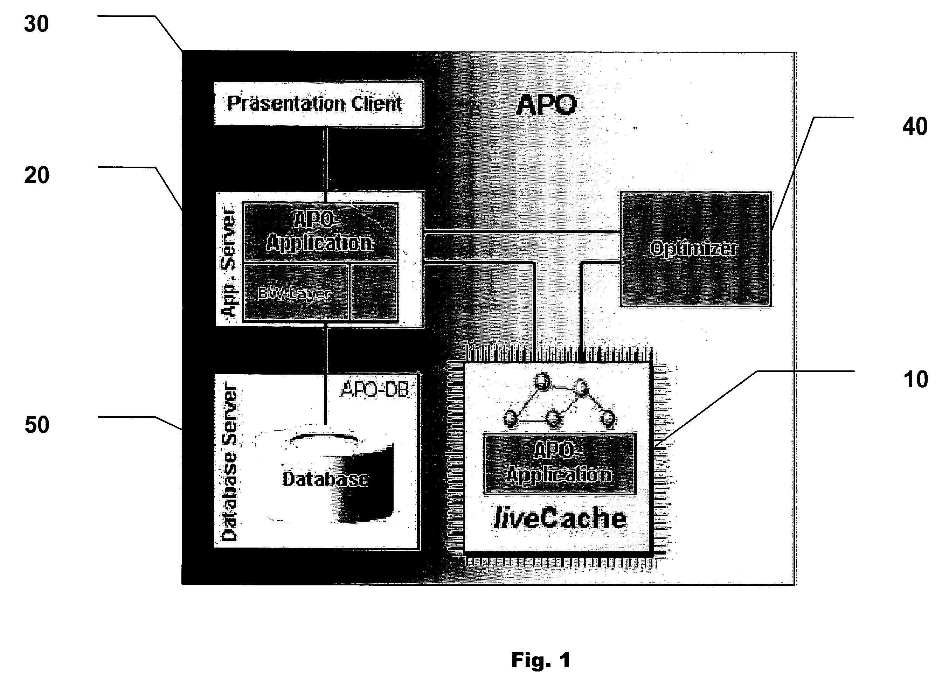

According to Fig. 1, the cache computer system 10 in which the present invention may be preferably used is connected via a communication link with an application server 20 which runs an APO application. Linked to application server 20 is a presentation client 30 which constitutes the interface to a user. Another external application system, an optimizer 40, is linked with both cache system 10 and APO application server 20. A conventional database server 50 may also be linked with the application server 20 for other purposes.

The cache system 10 comprises large main memory areas for keeping data in it. The data comprises in particular orders. Communication of the cache system 10 with the other systems 20, 40 is performed via an interface. For performing data processing, the cache system comprises data processing capabilities. The routines performed by and on the cache system level are denoted as COM routines.

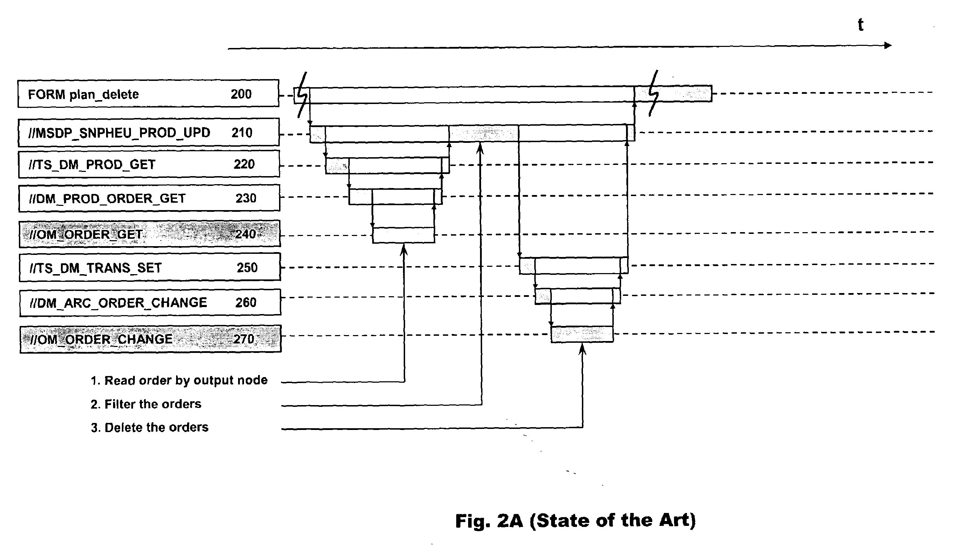

Fig. 2A displays the sequence of operations to be performed for deleting planned orders in the optimizer application 40. Planned orders are such orders which are delivered to a destination location. The destination is given by the parameter "output node" in the order data set. Deleting orders in the cache system comprises reading the orders (by specifying the output node) from the cache system, and transferring them to the external application system 20, 40, see COM routine 240. COM routine 240 is called by routine 230 which is run on the application level, i.e., on the application system 20, or 40. Actual filtering the orders to be deleted is also performed by routine 230 on the application level on the basis of the read data sets. Deletion of the respective orders is done by routine 270 on the cache system level.

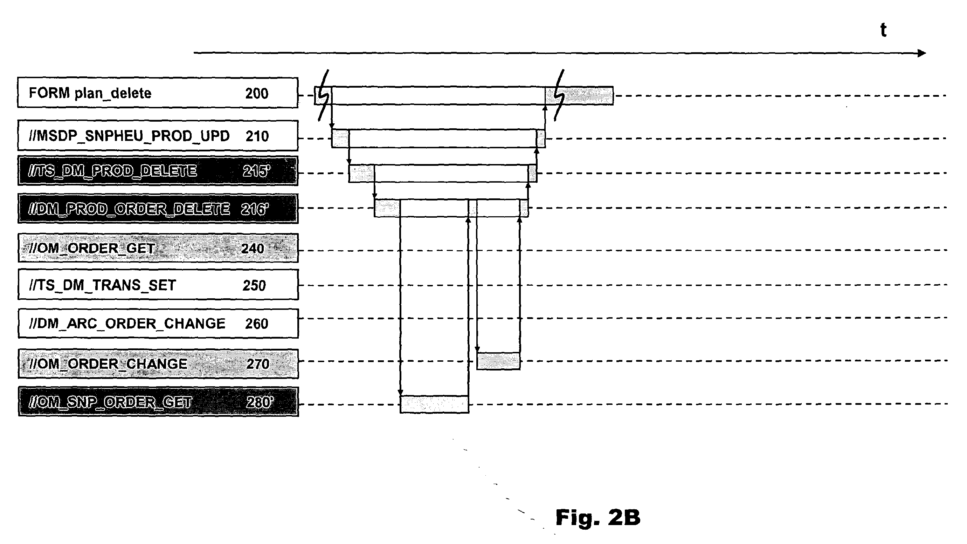

According to the invention, a new COM routine 280' (Fig. 2B) is provided which performs filtering the orders to be deleted directly on the cache system 10 level. In this case, both filtering and deleting the respective orders are performed on the cache system 10 level. Only the IDs of the data sets which are deleted are returned to the external application 20, 40. This leads to a significantly reduced amount of data transfer. between cache system and application system.

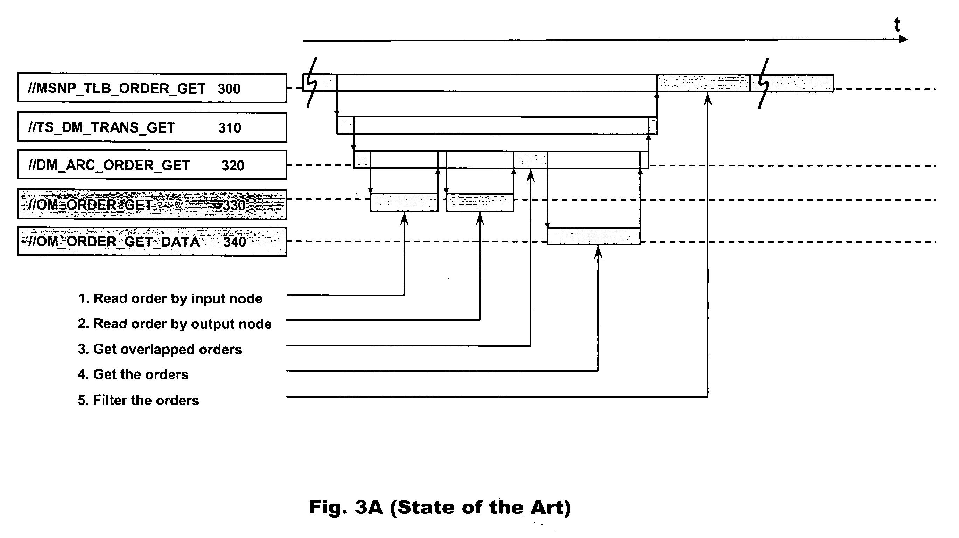

Fig. 3A displays the sequence of operations to be performed for reading such orders from the cache system which specify stock transfer operations. Stock transfer operations are such operations which consist in transferring goods from a source location to a destination location. Conventionally, reading stock transfer orders requires reading orders by input node, and by output node, see COM routine 330, which is invoked by the external routine 320. The order data sets are transferred to the external application, where those orders are found which are overlapping each other, i.e., which have a common source location and a common destination location. These overlapped orders are then filtered out of the read orders on the application level, by routine 300.

As it is clear from Fig. 3A, reading stock transfer orders requires reading all orders by input node as well as all orders by output node. Filtering the overlapped orders is then done on the application level.

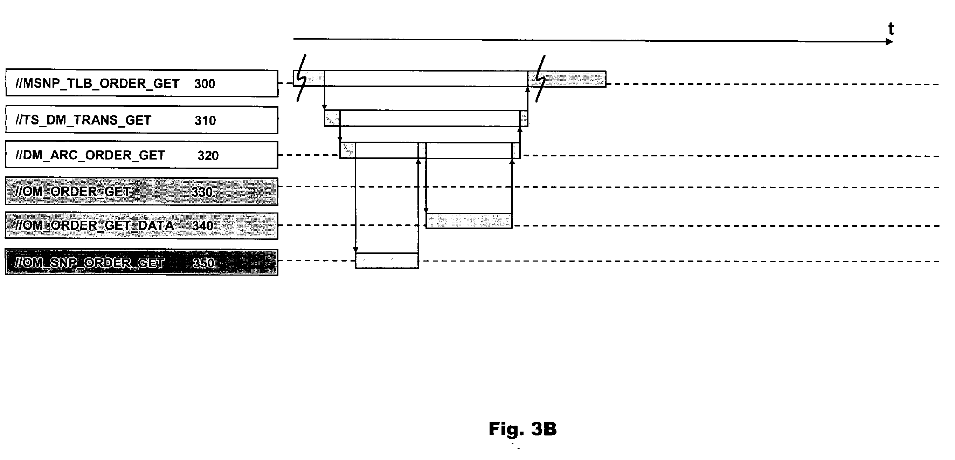

According to the invention, a new COM routine 350' is provided which allows filtering the order data directly on the cache system level. Fig. 3B shows the sequence of routines according to the invention. Thus, only the order data sets resulting from the filtering step are transferred to the external application.

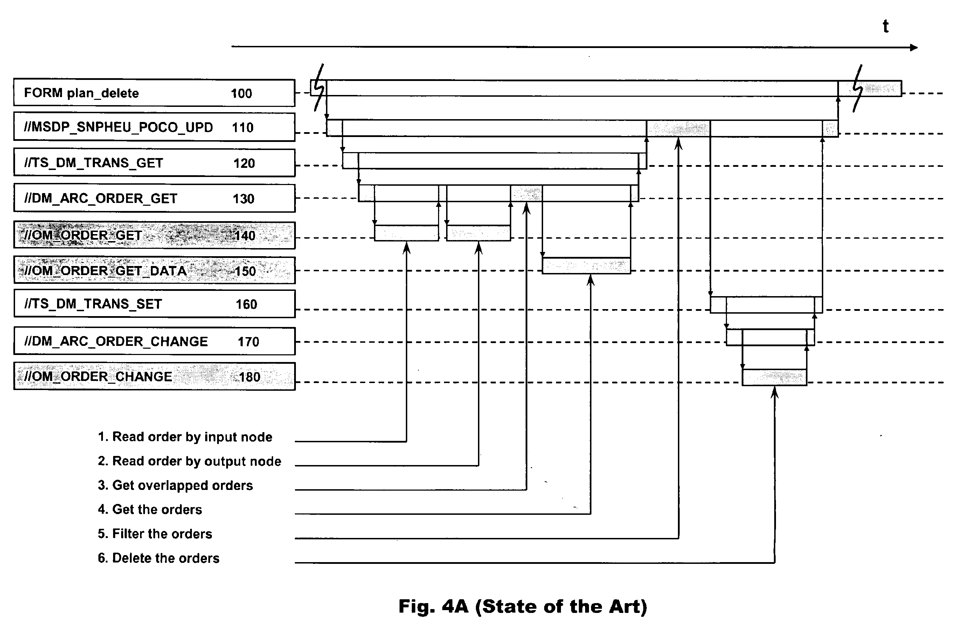

Fig. 4A displays the sequence of operations to be performed for deleting such orders from the cache system which specify stock transfer operations. Deletion of those orders requires, in the art, getting all the orders which go out from source location (see routine 140-1), and all the orders which go to destination location (see routine 140-2), and filtering from all these orders those orders which have the specified origin destination locations (see routine 110-5). The outgoing orders are read by the routine 130 which calls the COM routine 140. The same routine but with other parameters has to be invoked for reading the orders which arrive at the destination location. The filtering step is performed at the application level (routine 110-5). Thus, filtering the orders of interest requires a large amount of data transfer from the cache system 10 to application system 20.

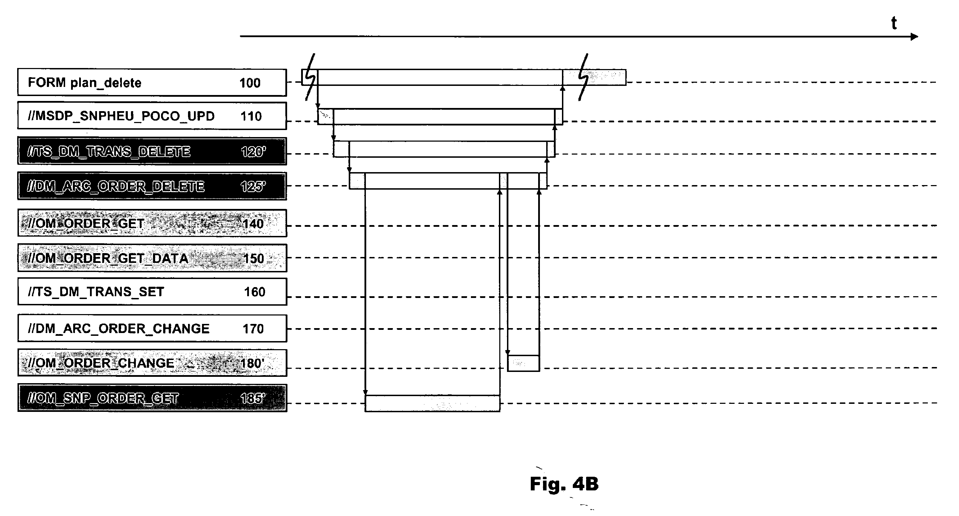

According to the invention, COM routine 185' is provided which performs filtering the order data on the cache system level, and routine 180' which performs deleting specified orders on the cache system level, see Fig. 4B.

The COM routines are called by routines 120' and 125' which are run on the application level. Since according to the invention, filtering the orders is performed on the cache system level, data transfer steps from cache system to application system required in the art are avoided.

The invention can also be applied to other functions of Supply Network Planning (SNP), which is another application delivered by SAP AG:

The capacity leveling function of SNP is used to level the capacity load of resources by moving orders into earlier or later periods using forward or backward scheduling. SNP capacity leveling is geared towards leveling specific bottleneck resources. It is run locally on a resource during a specified time period, which means that dependencies with other resources are ignored.

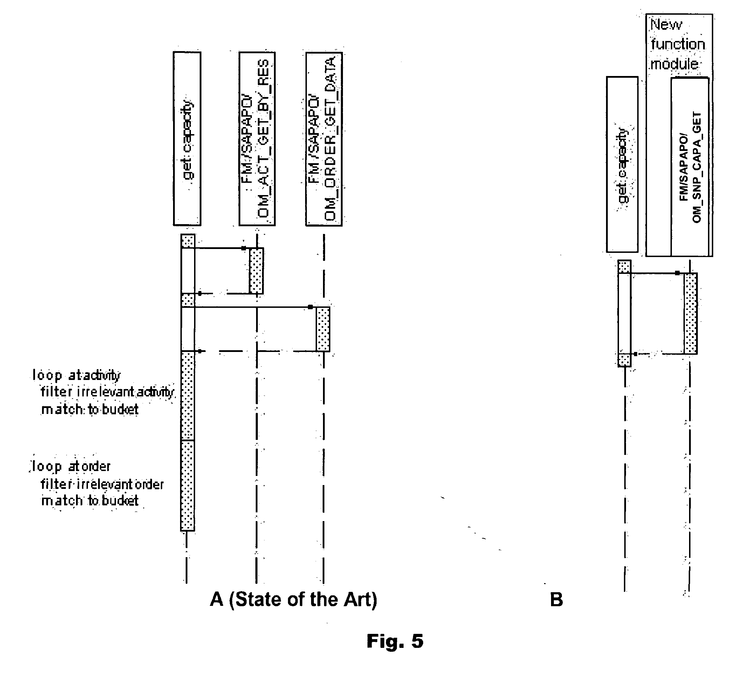

In the art, extracting the resource consumption with the corresponding aggregated orders is requiring to call more than one OM module and the calls are extracting also unnecessary data, see Fig. 5A. It has not been possible to have a more specific call because there are only a limited number of input parameters on the interface. This process is sometimes taking very long and not efficient for a heavy loaded selection of resources.

According to the invention, a new function module OM_SNP_CAPA_GET is provided which allows getting the information needed with one call to the cache system, see Fig. 5B.

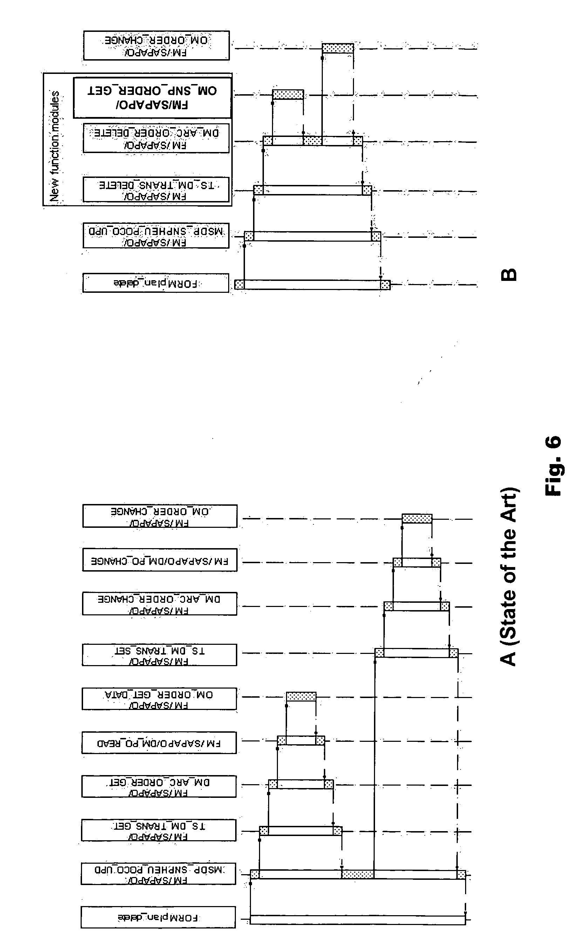

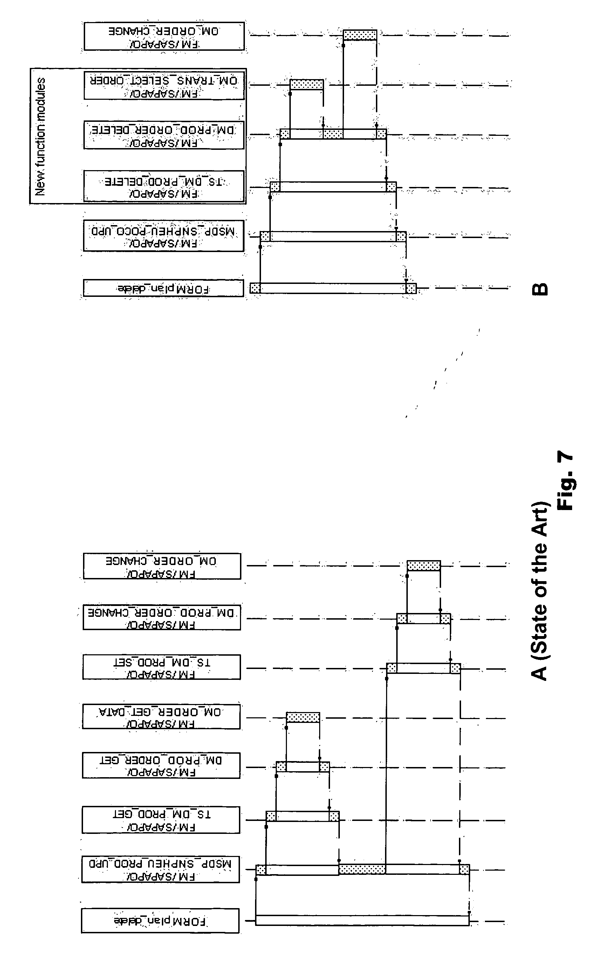

In the same way, the deletion of transport orders and production orders within SNP can be accelerated by the present invention. Currently all data is extracted to the external application, and then it is analyzed which data fulfills a certain criteria for deletion see Fig. 6A for a deletion of a transport order, and Fig. 7A for deletion of a production order in the cache system 10. This action requires so many function module calls in many layers, and too many unnecessary data is being extracted. Fig 6B displays the sequence of calls for the deletion of a transport order according to the invention, Fig. 7B shows the sequence of calls for the deletion of a production order according to the invention.

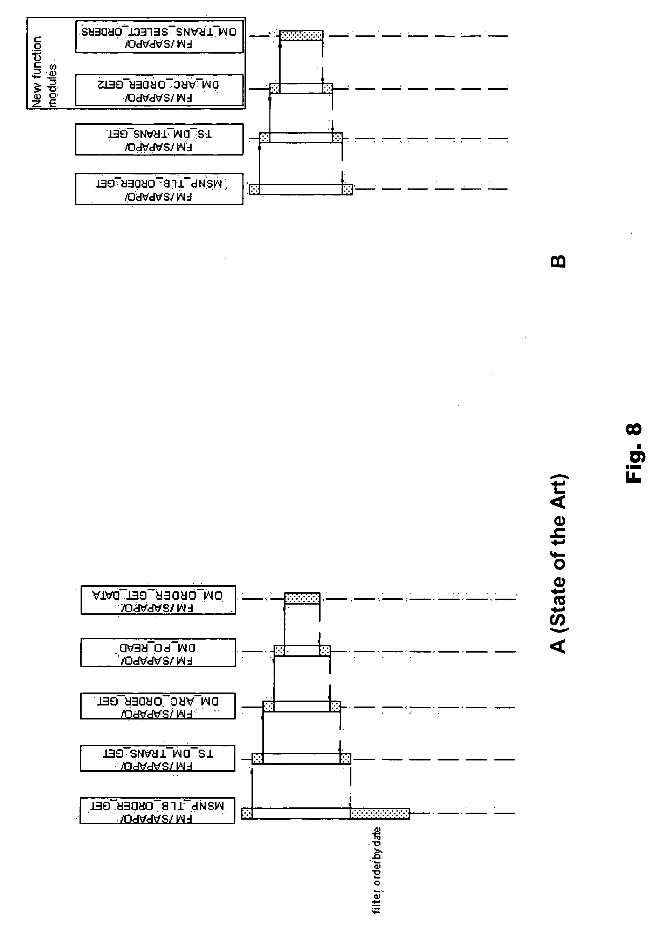

The invention can be further applied for the selection of transport orders in the transport load builder (TLB), which is another application delivered by SAP AG. The TLB achieves optimal transport load builds by grouping products for transport based on deployment recommendations while ensuring vehicles are filled to maximum capacity. In the art, an unspecific call is causing a number of unnecessary data to be extracted, see Fig. 8A. The relevant data is filtered out only within the external application

According to the invention, the relevant data is selected on the cache system level by invoking a new routine, see Fig. 8B.

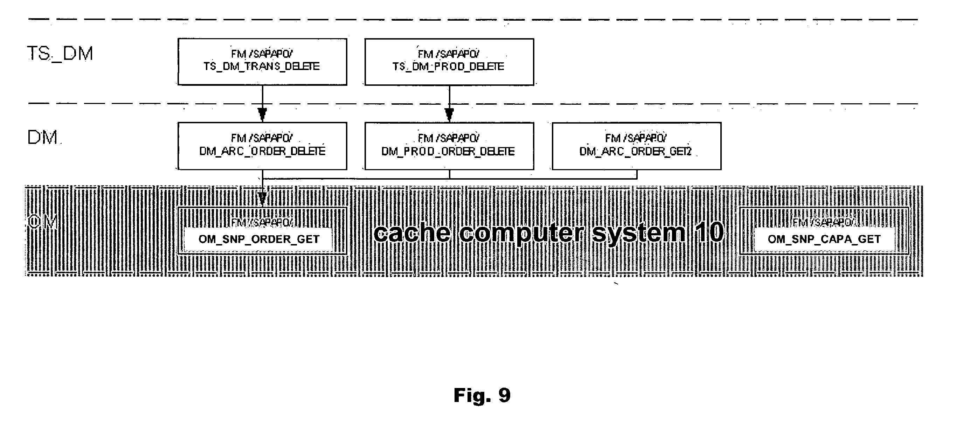

Fig. 9 shows two of the inventive COM routines, OM_SNP_ORDER_GET, and OM_SNP_CAPA_GET together with the new function modules which invoke these new COM routines from the calling external application.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

Other embodiments are in the scope of the following claims.

## Claims

1. Method for processing data in a cache computer system (10), the cache computer system (10) providing data base management capabilities to external computer systems (20, 30, 40), the cache computer system (10) providing main memory space to the external client computer systems (20, 30, 40), the data representing orders in a supply chain management application, each order comprising parameters specifying the order, and an ID identifying the order, the cache computer system (10) further comprising capabilities for reading the order data in the main memory areas, and capabilities for transferring the order data from and into the main memory area to the external computer systems (20, 30, 40), the method comprising the following steps:
a) receiving, from an external client system (20, 30, 40), via an interface, a call for processing an order, the call specifying parameters of the order which is to be processed;
b) searching the specified order data in the main memory area according to the parameters specified in the call;
c) processing the specified order in the cache computer system (10);
d) returning the ID of the processed order data from the cache computer system (10) to the external client computer system (20, 30, 40).

2. The method according to claim 1, wherein the order data represents one of transportation order, stock transfer order, and production order.

3. The method according to claim 1 or 2, wherein the processing step c) comprises a data filtering operation according to the specifying parameters.

4. The method according to one of the preceding claims, wherein the processing step c) comprises a data deleting operation according to the specifying parameters.

5. The method according to one of the preceding claims, wherein the processing step c) comprises an operation for extracting transportation orders from the main memory area according to the specifying parameters.

6. The method according to one of the preceding claims, wherein the processing step c) comprises an operation for extracting production orders from the main memory area according to the specifying parameters.

7. The method according to one of the preceding claims, wherein the processing step c) comprises an operation for extracting resource consumption with its aggregated orders from the main memory area according to the specifying parameters.

8. A computer system for performing the method according to claim 1.

9. The computer system according to claim 8, further comprising a database server system (50) for backing up data kept in the cache computer system (10).

10. The computer system according to claim 8 or 9, further comprising an interface for communication with the external computer systems (20, 30, 40).

11. A computer-readable storage medium comprising program code for performing the method according to claim 1, when loaded into a computer system.
